# EUROPÄISCHE PATENTSCHRIFT

(11) **EP 0 796 292 B1**
(45) Veröffentlichungstag und Bekanntmachung des Hinweises auf die Patenterteilung: **12.05.1999**
(21) Anmeldenummer: 95938463.7
(22) Anmeldetag: 23.11.1995
(51) Int. Cl.: C08K 5/00, C08L 53/02

(54) **STABILISIERTE STYROL/BUTADIEN-BLOCKCOPOLYMERE**
STABILIZED STYRENE/BUTADIENE BLOCK COPOLYMERS
COPOLYMERES SEQUENCES STYRENE-BUTADIENE STABILISES

(30) Priorität: 06.12.1994 DE 4443361
(43) Veröffentlichungstag der Anmeldung: 24.09.1997
(73) Patentinhaber: BASF AKTIENGESELLSCHAFT, 67056 Ludwigshafen (DE)
(72) Erfinder: NIESSNER, Norbert, D-67159 Friedelsheim (DE); NAEGELE, Paul, D-67166 Otterstadt (DE); BENEDIX, Franz, D-67166 Otterstadt (DE)
(86) Internationale Anmeldenummer: EP9504614
(87) Internationale Veröffentlichungsnummer: WO9617886

(56) Entgegenhaltungen:
- EP-A- 0 263 524
- WO-A-95/34600
- GB-A- 2 260 764
- US-A- 5 384 349

## Beschreibung

Die Erfindung betrifft eine Mischung zur Stabilisierung von kautschukartigen oder steifen Styrol/Butadien-Blockcopolymeren und deren Gemischen mit weiteren Polymeren und deren Verwendung.

Viele polymere Werkstoffe (vor allem Thermoplaste) unterliegen Alterungserscheinungen, die während der Herstellung, der Lagerung, der Verarbeitung oder der Benutzung in unerwünschter Weise wirksam werden und im weitesten Sinne durch Oxidation verursacht werden. Besonders empfindlich sind olefinisch ungesättigte Polymere wie Natur- oder Polybutadien-Synthesekautschuk oder mit solchen Kautschuken zähmodifizierte Thermoplaste.

Die Thermoplaste verändern durch Oxidation ihr äußeres Erscheinungsbild (Transparenz, Farblosigkeit, Rißfreiheit) und verlieren mehr oder weniger parallel dazu ihre guten mechanischen Eigenschaften (Schlagzähigkeit, Reißdehnung, Zugfestigkeit). Im Extremfall wird ein Gebrauchsartikel gänzlich unbrauchbar.

Unter verschiedenen möglichen Stabilisierungsmethoden ist der Zusatz von Antioxidantien die allgemein übliche und am weitesten verbreitete Methode. Antioxidantien sind chemische Verbindungen, welche die Oxidation und die daraus resultierenden Alterungserscheinungen eines Polymeren verzögern können, wobei sie typischerweise selbst verändert werden.

Sie sind im allgemeinen schon in geringen Mengen wirksam und werden zweckmäßigerweise einem Polymeren möglichst frühzeitig bei dessen Herstellung zugegeben (R. Gächter und H. Müller, Taschenbuch der Kunststoff-Additive, 2. Aufl., 1983, S. 2 ff., Carl Hanser Verlag München).

Den höchsten Anteil am Antioxidantienverbrauch haben, neben den Polyolefinen, Acrylnitril-Butadien-Styrol-Copolymere (ABS) und schlagfestes Polystyrol (SB).

Man unterscheidet bei den Antioxidantien nach ihrem Wirkmechanismus zwischen primären und sekundären Antioxidantien. Die wichtigsten primären Antioxidantien sind sogenannte sterisch gehinderte Phenole, daneben sekundäre aromatische Amine. Letztere spielen speziell bei hellfarbigen Thermoplasten wegen ihrer Neigung, die stabilisierten Produkte zu verfärben, nur eine untergeordnete Rolle.

Primäre Antioxidantien sollen als Radikalfänger wirken, während die Wirkung der sekundären (Phosphite, Thioether) auf ihrer Fähigkeit, Hydroperoxide zu zersetzen beruhen soll. In der Praxis werden häufig synergistisch wirkende Mischungen aus primären und sekundären Antioxidantien angewendet.

Die im Handel befindlichen sog. sterisch gehinderten Phenole weisen eine große strukturelle Vielfalt auf: Beispielsweise werden Thiobisphenole, Alkylidenbisphenole, Alkylphenole, Hydroxybenzylverbindungen, Acylaminophenole oder Hydroxyphenylpropionate verwendet. Auf die o.g. Übersicht von Gächter/Müller wird im einzelnen verwiesen.

Für Polymere, die mit Lebensmitteln in Berührung kommen, müssen Stabilisatoren verwendet werden, die gesundheitlich unbedenklich sind, am besten solche, die auch in natürlichen Lebensmitteln vorkommen. α-Tocopherol (Vitamin E), das zu den sterisch gehinderten Phenolen gehört, wurde bereits als effizienter Stabilisator beschrieben:

EP 384,472 beschreibt die Verwendung von α-Tocopherol für Verpakkungsmaterial aus Polystyrol in Verbindung mit Lichtschutzmitteln.

EP 408,693 beschreibt Stabilisatormischungen für Styrolpolymere aus α-Tocopherol und Mono/Di/Triglyceriden.

Einen Einfluß auf das Oxidationsverhalten von Thermoplasten hat neben dem chemischen Aufbau auch deren morphologische Struktur: Zylinder- und Lamellenmorphologie findet man insbesondere bei Blockcopolymeren, z. B. aus Styrol und Butadien. Im Gegensatz zu den sich von der Kugelform ableitenden Morphologien schlagzäh modifizierender Kautschuke (Zellenteilchen-, Kapselteilchen-, Tropfenteilchen- oder Fadenteilchenmorphologie) wie sie bei gewöhnlichem schlagzähem Polystyrol (HIPS) oder Acrylnitril-Butadien-Styrol-(ABS-)Polymeren auftritt, bildet bei Blockcopolymeren die Kautschukphase einen molekularen Bestandteil, der bei der Verarbeitung einer erheblichen mechanischen Belastung ausgesetzt ist: Durch die unmittelbare chemische Verknüpfung mit der Hartphase werden Spannungen in der Kautschukphase schlecht abgebaut und damit die thermisch-oxidative Schädigung deutlich begünstigt.

Blockcopolymere mit dem Verhalten von schlagzähen Thermoplasten sind durch anionische Polymerisation leicht zugänglich (vgl. z.B. M. Szwarc: Carbanions, Living Polymers and Electron Transfer Processes, John Wiley Publ. 1968).

Zu diesen Blockcopolymeren gehören sternförmig verzweigte oder lineare Styrol/Butadien-Blockcopolymerisate mit überwiegendem Styrolanteil, wie sie z.B. in US 3 639 517 (70 bis 95 % Styrol, 5 bis 30 % Butadien), DE 25 50 227 und DE 25 50 226 (60 bis 95 % Styrol, 5 bis 40 % Butadien) beschrieben werden, aber auch solche mit überwiegendem Butadienanteil, wie sie z.B. unter den Handelsmarken Cariflex® der Fa. Shell oder Finaprene® der Fa. Fina Chemicals im Handel sind.

Aufgabe der Erfindung ist die Stabilisierung von anionisch hergestellten Styrol/Butadien-Blockcopolymeren der vorstehenden Art. Es wurde gefunden, daß eine Mischung eines organischen Phosphits mit α-Tocopherol und einem sterisch gehinderten Phenol in Styrol/Butadien-Blockcopolymeren hervorragend als Stabilisator wirkt.

Unmittelbarer Erfindungsgegenstand sind Formmassen aus durch anionische Polymerisation zugänglichen Styrol/Butadien-Blockcopolymeren der allgemeinen Struktur

(A)ₘ -X

in der A einen Blockcopolymerabschnitt aus wenigstens je einem Polystyrolblock der Molmasse 3000 bis 230000 [g/mol] und einem Polybutadienblock der Molmasse 2000 bis 30000 [g/mol] bedeutet, wobei die Gesamtmolmasse von A : 50000 bis 300000 [g/mol] ist, die Blockübergänge scharf oder verschmiert sind, die Sternastzahl m 3 bis 15 ist und X den m-funktionellen Rest eines Kopplungsmittels bedeutet, und/oder eines linearen Styrol/Butadien-Blockcopolymeren mit mindestens 2 Polystyrolblöcken und mindestens einem Polybutadienblock, wobei die vorstehenden Molgewichtsangaben gelten, die eine gegen den Abbau durch Licht, Luftsauerstoff und/oder Wärme stabilisierende Menge von, bezogen auf das Blockcopolymere, 0,01 bis 1 Gew.-% α-Tocopherol, 0,1 bis 2 Gew.-% eines organischen Phosphits der allgemeinen Formel RO₃P, in der R Alkyl, Alkylaryl, Aryl oder Cycloalkyl bedeutet sowie 0,01 bis 2 Gew.-% einer von α-Tocopherol verschiedenen Verbindung mit Phenolstruktur, die in Nachbarstellung (2,6-Stellung) zum phenolischen Hydroxylrest alkylsubstituiert ist, enthalten.

Erfindungsgegenstand sind weiterhin Formmassen der vorstehend genannten Art aus symmetrisch oder insbesondere unsymmetrisch sternförmig verzweigten Styrol/Butadien-Blockcopolymeren der allgemeinen Struktur (A)ₙ -X-(B)ₚ, in der A einen Blockcopolymerabschnitt aus wenigstens je einem Polystyrolblock der Molmasse 3000 bis 230000 [g/mol] und einem Polybutadienblock der Molmasse 2000 bis 30000 [g/mol] und B einen Blockcopolymerabschnitt aus wenigstens je einem Polystyrolblock der Molmasse 2000 bis 60000 [g/mol] und einem Polybutadienblock der Molmasse 2000 bis 30000 [g/mol] bedeutet, wobei die Gesamtmolmasse von A: 5000 bis 250000 [g/mol] und die von B: 5000 bis 75 000 [g/mol] ist, die Blockübergänge scharf oder verschmiert sind und die Sternastzahl n + p insgesamt 3 bis 15 ist, mit der Maßgabe, daß n ≤ p ist, und der Polystyrolblock des Abschnitts A mindestens die 1.5-fache Molmasse des Polystyrolblocks des Abschnitts B aufweist. Erfindungsgemäß stabilisierte Styrol/Butadien-Blockcopolymere umfassen demnach sowohl lineare Styrol/Butadien-Blockcopolymere (also z.B. solche mit mindestens 2 Polystyrol-Blöcken und mindestens einem Polybutadien-Block), wobei die vorstehenden Molmassenangaben gelten, als auch symmetrisch oder - bevorzugt - unsymmetrisch - sternförmig aufgebaute Styrol/Butadien-Blockcopolymere die wie vorstehend angegeben stabilisiert sind.

Nach einer weiteren, ebenfalls bevorzugten Ausführungsform kann zusätzlich eine wirksame Menge von, bezogen auf das organische Phosphit, bis zu 5 Gew.-% eines Amins enthalten sein. Triisopropanolamin ist hierbei besonders bevorzugt.

Auch Mischungen erfindungsgemäßer Blockcopolymerer mit anderen thermoplastisch verarbeitbaren Polymeren werden bei der Verarbeitung durch Zusatz der erfindungsgemäßen Stabilisatorkombination von α-Tocopherol, Phosphit und Phenol wirksam geschützt. Die nachstehenden Mengenangaben für die Stabilisatoren beziehen sich auf die in solchen Mischungen vorhandene Menge an Blockcopolymeren; wenn die polymeren Mischungspartner ihrerseits in stabilisierter Form üblich sind, beziehen sich die Mengenangaben auf die Gesamtmenge an Polymeren, soweit nicht bereits andere Stabilisatoren in den Mischungspartnern verwendet worden sind. Die Gesamtmenge an Stabilisatoren liegt i. a. bei höchstens 5 Gew.-%.

α-Tocopherol wird in einer Konzentration von 0.01 bis 1 Gew.-%, vorzugsweise von 0.1 bis 0.5 Gew.-% angewandt. Es kann den Polymeren in jeder bekannten bzw. üblichen Art und Weise beigemengt werden, z.B. in reiner Form direkt bei der Verarbeitung, durch Vormischen von Antioxidans und wustabilisiertem Polymergranulat. durch Vormischen von Antioxidans und Polymerisat in Lösung und gemeinsamen Lösungsmittelentzug (Entgasung) oder in Form eines Konzentrats (Masterbatch).

Das organische Phosphit der allgemeinen Formel (RO)₃P wird in einer Menge von 0.1 bis 2 Gew.-% vorzugsweise von 0.2 bis 1 Gew.-% zugesetzt. Besonders wirksame Verbindungen sind beispielsweise Verbindungen, in denen R gleiche oder verschiedene Alkyl-, Alkylaryl-, Aryl- oder Cycloalkyl-Reste bedeutet. Beispiele sind Trimethylphosphit, Triphenylphosphit, Tris(nonylphenyl)phosphit, Tris(2,4-dimethyl-phenyl)phosphit, Diphenyldecylphosphit, Didecylphenyl-phosphit, Phenyldi(2-ethyl-hexyl)phosphit, Methyldiphenylphosphit, Phenyl-dicyclohexylphosphit, Diisopropylphenylphosphit, Diethyl-phenylphosphit, Di(2-ethylcyclohexyl)-n-butylphosphit, 3-Cyclopentylpropyl-dihexyl-phosphit. Bevorzugt wird Tris(nonylphenyl)-phosphit (TNPP) eingesetzt.

Nach einer besonders bevorzugten Ausführungsform wird das organische Phosphit seinerseits durch Zusatz einer Aminverbindung stabilisiert, insbesondere wird Triisopropanolamin in einer Menge von 0.1 bis 5 Gew.-%, bezogen auf 100 Gew.-% organisches Phosphit zugesetzt, das somit im Copolymerisat nur in ganz geringer Menge vorhanden ist.

Das sterisch gehinderte Phenol wird in einer Menge von 0.01 bis 2, vorzugsweise 0.05 bis 0.5 Gew.-% zugesetzt. Sterisch gehinderte Phenole sind Verbindungen mit Phenolstruktur, die in Nachbarstellung (2,6-Stellung) zum phenolischen Hydroxylrest alkylsubstituiert sind, wobei Alkyl in diesem Falle bevorzugt tertiär-Butyl (t-Butyl) oder Alkyl-t-butyl bedeutet.

Beispielsweise sind folgende Verbindungen geeignet, die z.T. außer der typischen Phenolstruktur noch Strukturelemente aufweisen, die nach einem anderen Mechanismus stabilisierend wirken:

2,6-Dimethylphenol, 2,6-Di-t-butyl-phenol, 2,6-Di-t-butyl-4-methylphenol, n-Octadecyl-3-(3,5-di-t-butyl-4-hydroxyphenyl)propionat, Tetrakis[3-(3,5-di-t-butyl-4-hydroxyphenyl)propionyloxymethyl]methan, 2-(2-Hydroxy-3-t-butyl-5-methylbenzyl)-4-methyl-6-t-butylphenylacrylat, 2-(2-hydroxy-3-t-butyl-5-methylbenzyl)-4-methyl-6-t-butylphenylmethacrylat, 2-(3,5-Di-t-butyl-4-hydroxybenzyl)-4-methylphenylmethacrylat, 2-(3,5-Di-t-butyl-4-hydroxybenzyl)-4-methylphenylacrylat, 4-(3,5-Di-t-butyl-4-hydroxybenzyl)phenylacrylat, 2-(3,5-Di-t-butyl-4-hydroxybenzyl)phenylmethacrylat, 2,6-Bis (2-hydroxy-3-t-butyl-5-methylbenzyl)-4-methylphenylmethacrylat. Besonders bevorzugt sind 2-(2-Hydroxy-3-t-butyl-5-methylbenzyl)-4-methyl-6-t-butyl-phenylacrylat, 2,6-Di-t-butylphenol und n-Octadecyl-3-(3,5-di-t-butyl-4-hydroxyphenyl)propionat.

In α-Stellung nur einfach substituierte oder unsubstituierte Phenole sind nur begrenzt verwendbar, da sie bei der Verarbeitung zu deutlichen Gelbfärbungen führen können.

Außerdem können weitere Zusätze vorhanden sein, wie polare und unpolare Wachse (nieder- bis mittelmolekulare Polyolefine, langkettige Amide, Stearin-, Myristin-, Laurin-, Palmitinsäureester, -salze, -säureamide), oder auch weitere anorganische und/oder organische Stabilisatoren. Beispielhaft seien genannt: Bis-stearoylethylendiamin, Calciumstearat, Zinkstearat, Erucasäureamid, Mikrohartwachs (z. B. Be Square® der Fa. Petrolite Polymers) oder Mineralöl. Weiterhin enthalten können sein: zusätzliche, nicht phenolische und nicht phosphitische Stabilisatoren, UV-Stabilisatoren, "HALS"-(hindered amine light stabilizer)-Verbindungen, Pigmente, Farbstoffe und Füllstoffe.

Als weitere Mischungskomponenten können zusätzlich zu den beschriebenen Styrol/Butadien-Blockcopolymeren, insbesondere in Mischung mit Polystyrol (nicht kautschukmodifiziert und/oder kautschukmodifiziert) beispielsweise noch eingesetzt werden:

Styrol/Acrylnitril-Copolymere, Polycarbonat, Styrol/Maleinsäureanhydrid-Copolymere, Styrol/(Meth)acrylat-Copolymere.

Die genannten Mischungen können unter den üblichen Bedingungen verarbeitet werden.

Unter Verarbeitung werden dabei alle üblichen Methoden verstanden, mit denen thermoplastisch verarbeitbare Polymere aufgeschmolzen und umgeformt werden, z. B. mittels Extrudern, Spritzgußmaschinen, Knetern usw.

Die Prüfung der Verarbeitungsstabilität kann im Falle der Styrol/ Butadien-Blockcopolymeren mit Zylinder- und Lamellenmorphologie z. B. mit Hilfe des als Rheograph 2000 bekannten Meßgeräts der Fa. Göttfert, Buchen durchgeführt werden.

Dabei wird das Polymerisat ähnlich wie bei der Extruder- oder Spritzgußverarbeitung als Schmelze durch eine Düse gedrückt und bei konstanter Schmelzetemperatur (in diesem Fall 270°C) und konstanter Schergeschwindigkeit (in diesem Fall 1,44·10¹·sek¹) der Extrusionsdruck gemessen. Im Verlauf der Meßzeit setzt infolge thermisch-oxidativer Schädigung des Polymerisats die Vernetzung der Kautschukphase ein. Dadurch steigt die Schmelzeviskosität und damit auch der Extrusionsdruck an. Diese Methode wird bei der Bewertung des Stabilisierungserfolgs in den nachstehenden Beispielen angewendet.

Die Wirkung eines Stabilisators kann an einem mehr oder weniger stark verzögerten Anstieg des Extrusionsdrucks im Vergleich zum nicht bzw. nicht erfindungsgemäß stabilisierten Polymer erkannt werden. Nach einer Vorlaufzeit von 6 min ab Extrusionsbeginn wird über längere Zeit der Extrusionsdruck p gemessen. Als Maß für die Verarbeitungsstabilität gilt die Zeit t [min], die erforderlich ist um eine bestimmte Druckdifferenz, den sogenannten Vernetzungsdruck Pᵥ von 10 bar aufzubauen. Dabei bedeutet längere Dauer eine bessere Stabilisierung im Vergleich zu Proben, deren Extrusionsdruck in kürzerer Zeit 10 bar erreicht.

### Beispiele und Vergleichsversuche

Nach der DE-PS 25 50 227, Beispiel 1, wurde ein sternförmig verzweigtes Styrol/Butadien-Blockcopolymerisat hergestellt. Die Viskositätszahl (VZ) lag bei 83.5 ml/g. Abweichend von dieser Vorschrift wurde das Polymerisat jedoch nicht mit Methanol ausgefällt, sondern unmittelbar mit den in der Tabelle 1 aufgeführten Stoffen versetzt und erst danach durch schonendes Extrudieren bei 200°C das Lösungsmittel entfernt ("entgast") und granuliert.

Als Phosphit wurde handelsübliches Trisnonylphenylphosphit (TNPP) und als sterisch gehindertes Phenol in der ersten Versuchsreihe ("Phenol 1") t-butyl-6-(3-t-butyl-2-hydroxy-5-methylbenzyl)-4-methylphenylacrylat - unter der Bezeichnung Irganox 3052 im Handel - und in einer weiteren Versuchsreihe ("Phenol 2") n-Octadecyl-3-(3, 5-di-t-butyl-4-hydroxyphenyl)propionat (Handelsprodukt Irganox® 1076) verwendet. Irganox ist ein eingetragenes Warenzeichen der Fa. Ciba-Geigy AG, Basel.

**Tabelle 1**

| Bsp./Vgl. | 1 | 2 | V1 | V2 | V3 |
|---|---|---|---|---|---|
| α-Tocopherol [%] | 0,05 | 0,05 | - | - | 0,3 |
| Phenol 1 [%] | 0,25 | - | 0,35 | - | - |
| Phenol 2 [%] | 0- | 0,25 | - | 0,35 | - |
| Phosphit [%] | 0,45 | 0,45 | 0,85 | 0,85 | 0,4 |
| Meßzeit t [min] | 88 | 41 | 84 | 26 | 67 |

Man erkennt aus der Tabelle: Gegenüber einer erfindungsgemäßen Kombination erreicht man mit den bekannten - einzeln oder in bekannter Kombination angewendeten - Stabilisatoren bei vergleichbarer Menge nur eine verschlechterte Stabilisierung. Um eine vergleichbar gute Stabilisierung zu erreichen, muß eine erheblich größere Menge des bzw. der Stabilisatoren aufgewendet werden.

## Patentansprüche

1. Formmasse aus durch anionische Polymerisation zugänglichen Styrol/Butadien-Blockcopolymeren der allgemeinen Struktur
(A)ₘ-X
in der A einen Blockcopolymerabschnitt aus wenigstens je einem Polystyrolblock der Molmasse 3000 bis 230000 [g/mol] und einem Polybutadienblock der Molmasse 2000 bis 30000 [g/mol] bedeutet, wobei A eine Gesamtmolmasse von 5000 bis 300000 [g/mol] aufweist, die Blockübergänge scharf oder verschmiert sind, die Sternastzahl m: 3 bis 15 ist und X den m-funktionellen Rest eines Kopplungsmittels bedeutet und/oder eines linearen Styrol/Butadien-Blockcopolymeren mit mindestens 2 Polystyrolblöcken und mindestens einem Polybutadienblock, wobei die vorstehenden Molgewichtsangaben gelten, enthaltend eine gegen den Abbau durch Licht, Luftsauerstoff und/oder Wärme stabilisierende Menge von, bezogen auf das Blockcopolymere, 0,01 bis 1 Gew. % α-Tocopherol, 0,1 bis 2 Gew.-% eines organischen Phosphits der allgemeinen Formel RO₃P, in der R Alkyl, Aralkyl, Aryl oder Cycloalkyl bedeutet, sowie 0,01 bis 2 Gew.-% einer von α-Tocopherol verschiedenen Verbindung mit Phenolstruktur, die in Nachbarstellung (2,6-Stellung) zum phenolischen Hydroxylrest alkylsubstituiert ist.

2. Formmasse nach Anspruch 1, dadurch gekennzeichnet, daß die Styrol/Butadien-Blockcopolymeren die allgemeine Struktur
(A)ₙ-X-(B)ₚ
aufweisen, in der A einen Blockcopolymerabschnitt aus wenigstens je einem Polystyrolblock der Molmasse 3 000 bis 230000 [g/mol] und einem Polybutadienblock der Molmasse 2000 bis 30000 [g/mol] und B einen Blockcopolymerabschnitt aus wenigstens je einem Polystyrolblock der Molmasse 2000 bis 60000 [g/mol] und einem Polybutadienblock der Molmasse 2000 bis 30000 [g/mol] bedeutet, wobei A eine Gesamtmolmasse von 5000 bis 250000 [g/mol] und B eine solche von 5000 bis 75000 [g/mol] aufweist, die Blockübergänge scharf oder verschmiert sind und die Sternastzahl n + p insgesamt 3 bis 15 ist, mit der Maßgabe, daß n ≤ p ist und der Polystyrolblock des Abschnitts A mindestens die 1.5-fache Molmasse des Polystyrolblocks des Abschnitts B aufweist.

3. Formmasse nach Anspruch 1 oder 2, enthaltend bis zu 5 Gew.-%, bezogen auf das organische Phosphit, eines organisches Phosphit stabilisierenden Amins.

## Claims

1. A molding material comprising styrene/butadiene block copolymers obtainable by anionic polymerization and of the structure
(A)ₘ-X
where A is a block copolymer segment comprising at least one polystyrene block having a molecular weight of from 3000 to 230,000 [g/mol] and one polybutadiene block having a molecular weight of from 2000 to 30,000 [g/mol], the total molecular weight of A being from 5000 to 300,000 [g/mol], the block transitions being well defined or tapered, the number of star branches m being from 3 to 15 and X being the m-functional radical of a coupling agent, or a linear styrene/butadiene block copolymer having at least 2 polystyrene blocks and at least one polybutadiene block, the molecular weights stated above being applicable, which contain an amount, having a stabilizing effect against degradation by light, atmospheric oxygen or heat, and based on the block copolymer, of from 0.01 to 1% by weight of α-tocopherol, from 0.1 to 2% by weight of an organic phosphite of the formula RO₃P, where R is alkyl, aralkyl, aryl or cycloalkyl, and from 0.01 to 2% by weight of a compound having a phenol structure which is different from α-tocopherol and is alkyl-substituted in the position (2,6 position) adjacent to the phenolic hydroxyl radical.

2. A molding material as claimed in claim 1, wherein the styrene/butadiene block copolymers are of the structure
(A)ₙ-X-(B)ₚ
where A is a block copolymer segment comprising at least one polystyrene block having a molecular weight of from 3000 to 230,000 [g/mol] and one polybutadiene block having a molecular weight of from 2000 to 30,000 [g/mol] and B is a block copolymer segment comprising at least one polystyrene block having a molecular weight of from 2000 to 60,000 [g/mol] and one polybutadiene block having a molecular weight of from 2000 to 30,000 [g/mol], the total molecular weight of A being from 5000 to 250,000 [g/mol] and that of B being from 5000 to 75,000 [g/mol], the block transitions being well defined or tapered and the total number of star branches n + p being from 3 to 15, with the proviso that n ≤ p and the molecular weight of the polystyrene block of segment A is at least 1.5 times that of the polystyrene block of segment B.

3. A molding material as claimed in claim 1 or 2, containing up to 5% by weight, based on the organic phosphite, of an amine which stabilizes organic phosphite.

## Revendications

1. Matière à mouler constituée par des copolymères séquencés de styrène/butadiène obtenus par polymérisation anionique, répondant à la structure générale
(A)ₘ-X
dans laquelle A représente une section du copolymère séquencé constituée par au moins respectivement une séquence de polystyrène possédant une masse molaire de 3.000 à 230.000 [g/mole] et une séquence de polybutadiène possédant une masse molaire de 2.000 à 30.000 [g/mole], dans laquelle A présente une masse molaire totale de 5.000 à 300.000 [g/mole], les transitions entre les séquences étant bien marquées ou étalées, le nombre m de branches d'étoiles s'élevant à une valeur de 3 à 15, et X représente le radical m-fonctionnel d'un agent de couplage, et/ou par un copolymère séquencé linéaire de styrène/butadiène comprenant au moins deux séquences de polystyrène et au moins une séquence de polybutadiène, les indications fournies ci-dessus concemant le poids molaire restant valables, contenant une quantité de stabilisation contre la dégradation sous l'effet de la lumière, de l'oxygène de l'air et/ou de la chaleur, rapportée au copolymère séquencé, de 0,01 à 1% en poids d'a-tocophérol, de 0,1 à 2% en poids, d'un phosphite organique répondant à la formule générale RO₃P dans laquelle R représente un groupe alkyle, un groupe aralkyle, un groupe aryle ou un groupe cycloalkyle, et de 0,01 à 2% en poids d'un composé différent de l'α-tocophérol possédant une structure de phénol, qui porte un ou plusieurs substituants alkyle en position voisine (position 2,6) par rapport au radical hydroxyle phénolique.

2. Matière à mouler selon la revendication 1, caractérisée en ce que les copolymères séquencés de styrène/butadiène présentent la structure générale
(A)ₙ-X-(B)ₚ
dans laquelle A représente une section du copolymère séquencé constituée par au moins respectivement une séquence de polystyrène possédant une masse molaire de 3.000 à 230.000 [g/mole] et une séquence de polybutadiène possédant une masse molaire de 2.000 à 30.000 [g/mole], et B représente une section du copolymère séquencé constituée par au moins respectivement par une séquence de polystyrène possédant une masse molaire de 2.000 à 60.000 [g/mole] et une séquence de polybutadiène possédant une masse molaire de 2.000 à 30.000 [g/mole], dans laquelle A présente une masse molaire totale de 5.000 à 250.000 [g/mole] et B présente une masse molaire totale de 5.000 à 75.000 [g/mole], les transitions entre les séquences étant bien marquées ou étalées et le nombre n + p de branches d'étoiles représentant au total de 3 à 15, avec cette mesure que n ≤ p et que la séquence de polystyrène de la section A présente une masse molaire au moins 1,5 fois supérieure à celle de la séquence de polystyrène de la section B.

3. Matière à mouler selon la revendication 1 ou 2, contenant, jusqu'à concurrence de 5% en poids rapportés au phosphite organique, une amine organique stabilisant le phosphite.
